(19) Europäisches Patentamt
European Patent Office
Office européen des brevets

(11) **EP 1 993 081 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(51) Int Cl.:
*G08B 13/183* (2006.01)    *G01B 9/08* (2006.01)
*G01V 8/10* (2006.01)    *G01V 8/20* (2006.01)
*F16P 3/14* (2006.01)

(21) Anmeldenummer: **08006230.0**

(22) Anmeldetag: **31.03.2008**

(54) **Optoelektronische Sensoranordnung und Verfahren zur Überwachung eines Überwachungsbereiches**

Optoelectronic sensor assembly and method for monitoring a surveillance area

Dispositif de capteur optoélectronique et procédé de surveillance d'une zone de surveillance

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007 DE 102007023101**

(43) Veröffentlichungstag der Anmeldung:
**19.11.2008 Patentblatt 2008/47**

(73) Patentinhaber: **SICK AG**
**79183 Waldkirch (DE)**

(72) Erfinder:
• **Meyer, Christoph**
**79261 Gutach (DE)**
• **Wüstefeld, Martin**
**79350 Sexau (DE)**
• **Henkel, Olaf**
**79276 Reute (DE)**

(74) Vertreter: **Modrow, Stephanie**
**Westphal, Mussgnug & Partner**
**Patentanwälte**
**Am Riettor 5**
**78048 Villingen-Schwenningen (DE)**

(56) Entgegenhaltungen:
**EP-A- 1 246 148    EP-A- 1 544 643**
**DE-A1- 19 718 390**

**Beschreibung**

Die Erfindung betrifft eine optoelektronische Sensoranordnung gemäß dem Oberbegriff des Patentanspruchs 1 und ein Verfahren zur Überwachung eines Überwachungsbereichs.

Bekannt sind optoelektronische Sensoranordnungen mit mehreren in einer Lichtsenderleiste nebeneinander angeordneten Lichtsendern, welche jeweils Licht in einen Sendekegel in einen Überwachungsbereich abstrahlen, und mit mehreren in einer Lichtempfängerleiste nebeneinander angeordneten Lichtempfängern, welche Licht aus einem Empfangskegel aus dem Überwachungsbereich aufnehmen und welche jeweils als ortsauflösende Lichtempfänger ausgebildet sind, wobei jeweils ein Lichtsender mit einem Lichtempfänger einen Lichtsender/Lichtempfängerpaar bildet.

Derartige optoelektronische Sensoranordnungen werden beispielsweise bei Schutzeinrichtungen an gefahrbringende Bewegungen ausführenden Anlagen oder Maschinen oder auch an Automatisierungseinrichtungen und Förderstraßen verwendet.

Mit Hilfe der optoelektronischen Sensoranordnungen soll erkannt werden, ob sich ein Objekt in einem Gefahrenbereich bewegt, so dass gegebenenfalls die Bewegungen der Anlagen oder Maschinen gestoppt oder zumindest in ihrer Geschwindigkeit verringert werden können, oder ob entlang der Förderstraßen und Automatisierungsanlagen bestimmte Objekte in der gewünschten Weise transportiert werden.

Bekannt ist es dabei, die optoelektronische Sensoranordnung sowohl als Einweglichtgitter, bei welchem sich die Lichtsenderleiste und die Lichtempfängerleiste auf gegenüberliegenden Seiten des Überwachungsbereichs befinden, als auch als Reflexionslichtgitter, bei welchem die Lichtsenderleiste und die Lichtempfängerleiste nebeneinander auf einer Seite des Überwachungsbereichs angeordnet sind, während ihnen gegenüberliegend ein Reflektorelement, insbesondere ein Retroreflektor zur Rückspiegelung des von den Lichtsendern abgestrahlten Lichtes zu den Lichtempfängern, angeordnet ist, auszubilden.

In beiden Fällen unterbricht ein in den Überwachungsbereich eingedrungenes Objekt den Lichtweg zwischen Lichtsender und Lichtempfänger, so dass ein entsprechendes Signal von der optoelektronischen Sensoranordnung ausgegeben werden kann, aufgrund dessen beispielsweise ein Alarm ausgelöst oder Maschinen oder Anlagen gestoppt werden können.

Damit eine zuverlässige Funktion der optoelektronischen Sensoranordnung auch bei Stoß oder Vibrationsbelastung sicher gestellt ist, senden die Lichtsender in der Regel ihr Licht in Form eines sich öffnenden Sendekegels aus, während der Lichtempfänger in der Regel Licht aufnehmen kann, dass aus einem Empfangskegel kommend auf den Lichtempfänger auftritt.

Einen optoelektronischen Sensor mit mehreren Lichtsender/Lichtempfängerpaaren, wobei die Lichtempfänger als ortsauflösende Lichtempfänger ausgebildet sind, zeigt beispielsweise die DE 197 18 390 A1. Bei diesem optoelektronischen Sensor wird für jedes ortsauflösende Empfangselement der Empfangslichtschwerpunkt bestimmt und mit einem Sollwert verglichen. Anhand des Empfangslichtschwerpunkts und der Abweichungen von dem entsprechenden Sollwert kann beispielsweise erkannt werden, ob eine Umspiegelung eines Objekts in dem Überwachungsbereich vorliegt. Nachteilig dabei ist jedoch, dass, sobald unterschiedliche Lichtquellen auf den Empfänger einstrahlen, der Empfangslichtschwerpunkt lediglich das überlagerte Signal der verschiedenen Lichtquellen darstellt. Unter bestimmten Umständen können Umspiegelungen von in den Überwachungsbereich eingedrungenen Objekten nicht erkannt werden, so dass der Gegenstand, der unzulässigerweise in den Überwachungsbereich eingedrungen ist, nicht erkannt wird.

Eine Aufgabe der Erfindung besteht daher darin, eine optoelektronische Sensoranordnung bereitzustellen, mit welcher besonders zuverlässig derartige Umspiegelungen erkannt werden sollen. Weiterhin soll ein entsprechendes Verfahren zur Überwachung des Überwachungsbereiches angegeben werden.

Der optoelektronische Sensor gemäß der DE 197 18 390 A1 ist in der Lage, eine Dejustage aufgrund einer gleichmäßigen Verschiebung der Empfangslichtschwerpunkte zu erkennen. Da der Empfangslichtschwerpunkt jedoch eine Überlagerung von Licht aus verschiedenen Lichtquellen darstellen kann, ist mit Hilfe eines derartigen Verfahrens eine Erkennung einer Dejustage und eine anschließende Ausrichtung der Lichtsender relativ zu den Lichtempfängern möglicherweise mit Fehlern behaftet.

Eine Aufgabe der Erfindung besteht daher darin, eine optoelektronische Sensoranordnung bereitzustellen, mit welcher eine möglichst exakte Ausrichtung der Senderleiste relativ zu der Empfängerleiste möglich ist. Weiterhin soll ein entsprechendes Verfahren angegeben werden.

In vielen Anwendungen ist es jedoch nicht ausreichend, eine korrekte Ausrichtung der Lichtsenderleiste relativ zu der Lichtempfängerleiste zu gewährleisten, sondern der Abstand zwischen der Lichtsenderleiste und der Lichtempfängerleiste muss ebenfalls mit hoher Genauigkeit bestimmt werden. Die DE 103 59 782 A1 beschreibt eine optoelektronische Sensoranordnung mit mehreren nebeneinander angeordneten Lichtsendern und mehreren nebeneinander angeordneten Lichtempfängern, die mehrere zusammenarbeitende Lichtsender/Lichtempfängerpaare bilden. In einem Abstandsermittlungsverfahren wird aus der Anzahl der von einem Lichtempfänger sichtbaren Lichtsender und/oder aus der Anzahl der einen Lichtsender sehenden Lichtempfänger der Abstand der Lichtsender zu den Lichtempfängern ermittelt wird. Dieses Verfahren zur Bestimmung des Abstands zwischen den Lichtsendern und den Lichtempfängern kann jedoch nur dann durchgeführt werden, wenn in der Lichtsenderleiste eine hohe Anzahl von Lichtsendern und in der Lichtempfängerleiste eine hohe Anzahl von Lichtempfängern angeordnet ist. Sind in der Lichtsenderleiste lediglich zwei Lichtsender und der Lichtempfängerleiste lediglich zwei Lichtempfänger angeordnet, ist dieses Verfahren nicht mehr anwendbar.

Eine weitere Aufgabe der Erfindung besteht daher darin, eine optoelektronische Sensoranordnung anzugeben, mit welcher auch auf kostengünstige Art und Weise der Abstand zwischen den Lichtsendern und den Lichtempfängern bestimmt werden kann. Zusätzlich ist dazu ein entsprechendes Verfahren bereitzustellen.

Die Aufgaben der Erfindung werden gelöst durch eine optoelektronische Sensoranordnung mit den Merkmalen des Patentanspruchs 1 und durch ein Verfahren zur Überwachung eines Überwachungsbereichs mit den Merkmalen des Patentanspruchs 7, 9 oder 13.

Vorteilhafte Ausgestaltungen und Weiterbildungen der Erfindung sind in den Unteransprüchen angegeben.

Die erfindungsgemäße optoelektronische Sensoranordnung weist eine Steuereinheit auf, in welcher Mittel zur Bestimmung des Lichtauftreffpunkts des Sendekegels jeweils eines der Lichtsender und/oder einer Fremdlichtquelle auf einem der Lichtempfänger vorhanden sind. Für jede einzelne Lichtquelle kann somit der Lichtauftreffpunkt des entsprechenden Lichtstrahls oder Sendekegels auf dem Lichtempfänger ortsaufgelöst ermittelt werden. Gegenüber einer Ermittlung des Empfangslichtschwerpunkts hat dies den Vorteil, dass ermittelt werden kann, ob Licht von verschiedenen Lichtquellen auf den Lichtempfänger einfällt. Wie nachfolgend noch beschrieben wird, ist dadurch eine zuverlässigere Ermittlung von Umspiegelungen, ein verbessertes Ausrichtverfahren und eine vereinfachte Abstandsmessung möglich.

Vorzugsweise ist über die Steuereinheit jeder Lichtsender und jeder Lichtempfänger unabhängig voneinander ansteuerbar, so dass beispielsweise verschiedene Lichtsender/Lichtempfängerpaare zyklisch aktiviert werden können, um entsprechende Auswertungen vorzunehmen, oder dass beispielsweise auch nur ein Lichtsender, aber mehrere Lichtempfänger aktiviert werden können, um die entsprechenden Lichtauftreffpunkte eines einzelnen Lichtsenders auf den Lichtempfängern zu ermitteln und für entsprechende Auswerteverfahren zu verwenden.

Besonders bevorzugt bestehen die ortsauflösenden Lichtempfänger aus einer Matrixanordnung von mehreren lichtempfindlichen Elementen, vorzugsweise aus einem CCD-Sensor oder einem CMOS-Bildsensor.

Bei dem erfindungsgemäßen Verfahren zur Überwachung eines Überwachungsbereichs, bei welchem der Abstand zwischen den Lichtempfängern und den Lichtsendern ermittelt wird, wird für einen ersten und einen zweiten der Lichtempfänger der Lichtauftreffpunkt des Sendekegels des Lichtsenders bestimmt, welcher mit dem ersten Lichtempfänger ein Lichtsender/Lichtempfängerpaar bildet. Es wird somit lediglich ein Lichtsender aktiviert und der Lichtauftreffpunkt des Sendekegels dieses Lichtsenders auf zwei unterschiedlichen Lichtempfängern ermittelt. Anschließend wird aus den relativen Lagen der Lichtauftreffpunkte auf den beiden Lichtempfängern der Einfallswinkel auf den zweiten Lichtempfänger bestimmt. Der Einfallswinkel auf den ersten Lichtempfänger sollte etwa 90° betragen, da der erste Lichtempfänger mit dem Lichtsender ein Lichtsender/Lichtempfängerpaar bildet. Aus dem Einfallswinkel und dem Abstand zwischen den beiden Lichtempfängern kann der Abstand zwischen dem ersten Lichtempfänger und dem zugehörigen Lichtsender bestimmt werden. Dieses Verfahren kann bereits durchgeführt werden, wenn in der Lichtsenderleiste lediglich zwei Lichtsender und in der Lichtempfängerleiste lediglich zwei Lichtempfänger angeordnet sind. Auch für relativ klein dimensionierte Lichtgitter kann somit zuverlässig der Abstand zwischen den Lichtsendern und den zugehörigen Lichtempfängern bestimmt werden.

Zur Erhöhung der Genauigkeit der Abstandsbestimmung zwischen den Lichtsendern und den Lichtempfängern können zeitlich versetzt verschiedene Lichtsender/Lichtempfängerpaare ausgewertet werden. Vorzugsweise können auch die für mehrere Lichtsender/Lichtempfängerpaare ermittelten Werte für den Abstand entsprechend gemittelt werden.

Zur verbesserten Ausrichtung der optoelektronischen Sensoranordnung wird ein Verfahren zur Überwachung eines Überwachungsbereichs angegeben, bei welchen in einem Justierungsmodus für zwei der Lichtsender/Lichtempfängerpaare der Lichtauftreffpunkt des Sendekegels des Lichtsenders auf dem zugehörigen Lichtempfänger bestimmt wird, wobei anschließend aus den relativen Lagen der Lichtauftreffpunkte auf den beiden Lichtempfängern zu Solllagen, welche der optimalen Justierung entsprechen, auf die Art der Dejustierung geschlossen wird.

Vorzugsweise ist durch die nebeneinander angeordneten Lichtsender eine X-Achse, durch die Symmetrieachse des Sendekegels eines Lichtsenders eine Z-Achse und eine Y-Achse senkrecht zur X-Achse und zur Z-Achse definiert. Bei Abweichungen der Lichtauftreffpunkte beider Sendekegel der Lichtsender von der Solllage in die gleiche Richtung entlang der Y-Achse kann vorzugsweise auf eine Verdrehung der Lichtempfängerleiste um die X-Achse geschlossen werden. Bei Abweichung der Lichtauftreffpunkte beider Sendekegel der Lichtsender von der Solllage in die gleiche Richtung entlang der X-Achse kann vorzugsweise auf eine Verdrehung der Lichtempfängerleiste um die Y-Achse geschlossen werden. Bei Abweichung der Lichtauftreffpunkte beider Sendekegel der Lichtsender von der Solllage in entgegengesetzte Richtung entlang der Y-Achse kann vorzugsweise auf eine Verdrehung der Lichtempfängerleiste um die Z-Achse geschlossen werden. Bei Abweichung der Lichtauftreffpunkte beider Sendekegel der Lichtsender von der Solllage in entgegengesetzte Richtung entlang der X-Achse kann vorzugsweise auf eine verdrehte Montage der Lichtempfängerleiste geschlossen werden. Bei dem Vergleich der relativen Lagen der Lichtauftreffpunkte auf den beiden Lichtempfängern zu den entsprechenden Solllagen kann anhand der Art der Abweichung von der Solllage somit geschlossen werden, um welche Achse die Empfängerleiste jeweils gedreht werden muss, um die entsprechende Dejustage zu beseitigen. Auf diese Art und Weise ergibt sich ein besonders einfaches Ausrichtverfahren zum Ausrichten der Lichtempfängerleiste relativ zu der Lichtsenderleiste.

Auch bei diesem Verfahren sind lediglich zwei Lichtsender/Lichtempfängerpaare nötig, um die entsprechenden Werte zur Verfügung zu stellen. Vorzugsweise werden zeitlich versetzt verschiedene Lichtsender/Lichtempfängerpaare verwendet, sofern die optoelektronische Sensoranordnung mehr als zwei Lichtsender/Lichtempfängerpaare aufweist, um zuverlässigere Aussagen zu erhalten und eine optimierte Ausrichtung zu gewährleisten.

Vorzugsweise sind die Solllagen mittels eines Teach-In-Verfahrens ermittelbar, beispielsweise während des Herstellungsprozesses, in welchem in einem Aufbau der Lichtsenderleiste relativ zu der Lichtempfängerleiste die korrekte Ausrichtung eingestellt und die entsprechenden Lichtauftreffpunkte eingelernt werden können.

Bei einem weiteren erfindungsgemäßen Verfahren zur Überwachung eines Überwachungsbereichs wird in einem Überwachungsmodus für jeweils ein Lichtsender/Lichtempfängerpaar der Lichtauftreffpunkt des Lichtkegels des Lichtsenders auf dem zugehörigen Lichtempfänger bestimmt und geprüft, ob ein weiterer Lichtauftreffpunkt auf demselben Lichtempfänger beispielsweise durch eine Umspiegelung oder durch eine sonstige Fremdlichtquelle erzeugt wird. Falls ein weitere Lichtauftreffpunkt auf dem Lichtempfänger vorhanden sein sollte, kann aus den relativen Lagen der Lichtauftreffpunkte auf dem Lichtempfänger zu vorgegebenen Solllagen geschlossen werden, ob eine erlaubte oder eine unerlaubte Umspiegelung bzw. ein Fremdlichteintrag vorliegt.

Erlaubte Umspiegelungen können beispielsweise auftreten, wenn stark reflektierende Objekte in den Sende-/Empfangsbereich eintreten und diese einen zusätzlichen Lichtreflex auf dem Lichtempfänger erzeugen. Erlaubte Fremdlichteinträge können auftreten, wenn beispielsweise Lichtquellen zur Beleuchtung von Räumen vorhanden sind, welche einen zusätzlichen Lichtauftreffpunkt auf dem Lichtempfänger erzeugen. Derartige erlaubte Lichteinträge können vorzugsweise im Rahmen eines Teach-In-Verfahrens ermittelt werden und in der Steuereinheit als Solllagen hinterlegt werden.

Vorzugsweise werden zeitlich versetzt verschiedene Lichtsender/Lichtempfängerpaare verwendet, um die erhaltenen Informationen durch Mehrfachmessungen kontrollieren zu können und dadurch die Sicherheit und Zuverlässigkeit des Überwachungsverfahrens zu erhöhen.

In einem besonders bevorzugten Verfahren zur Überwachung eines Überwachungsbereichs werden zyklisch oder anlassbezogen der Abstandsermittlungsmodus, der Justierungsmodus und/oder der Überwachungsmodus aktiviert, um einerseits während des ständigen Betriebs durch den Überwachungsmodus die Zuverlässigkeit insbesondere bei der Detektion von Umspiegelungen zu erhöhen, andererseits jedoch in regelmäßigen Abständen die Justierung und/oder den Abstand der Lichtsendeleiste relativ zu der Lichtempfängerleiste zu kontrollieren und gegebenenfalls nachzujustieren.

Vorzugsweise weist die erfindungsgemäße optoelektronische Sensoranordnung in der Steuereinheit Mittel zur Durchführung der erfindungsgemäßen Verfahren auf.

Die Erfindung wird anhand der nachfolgenden Figuren ausführlicher erläutert.

Es zeigen:

Figur 1    eine schematische Darstellung eines Lichtempfängers mit Empfangsoptik und Ausschnittsvergrößerung,

Figur 2    eine schematische Darstellung einer Lichtsenderleiste zur Definition der Raumachsen,

Figur 3    eine schematische Darstellung einer optoelektronischen Sensoranordnung bei optimaler Ausrichtung,

Figur 4    eine schematische Darstellung der optoelektronischen Sensoranordnung gemäß Figur 3 mit um die X-Achse verdrehter Lichtempfängerleiste,

Figur 5    eine schematische Darstellung der optoelektronischen Sensoranordnung gemäß Figur 3 mit Verdrehung der Empfängerleiste um die Y-Achse,

Figur 6    eine schematische Darstellung der Lichtempfängerleiste der optoelektronischen Sensoranordnung gemäß Figur 3 mit Verdrehung um die Z-Achse,

Figur 7    eine schematische Darstellung der optoelektronischen Sensoranordnung gemäß Figur 3 mit verdrehter Montage der Lichtempfängerleiste,

Figur 8    die optoelektronische Sensoranordnung gemäß Figur 3 mit schematischer Darstellung der Ermittlung des Abstandes zwischen Lichtsenderleiste und Lichtempfängerleiste,

Figur 9     die optoelektronische Sensoranordung gemäß Figur 3 mit einem zulässigem Objekt in dem Überwachungsbereich und

Figur 10     die optoelektronische Sensoranordung gemäß Figur 3 mit einem zulässigem und einem unzulässigem Objekt in dem Überwachungsbereich.

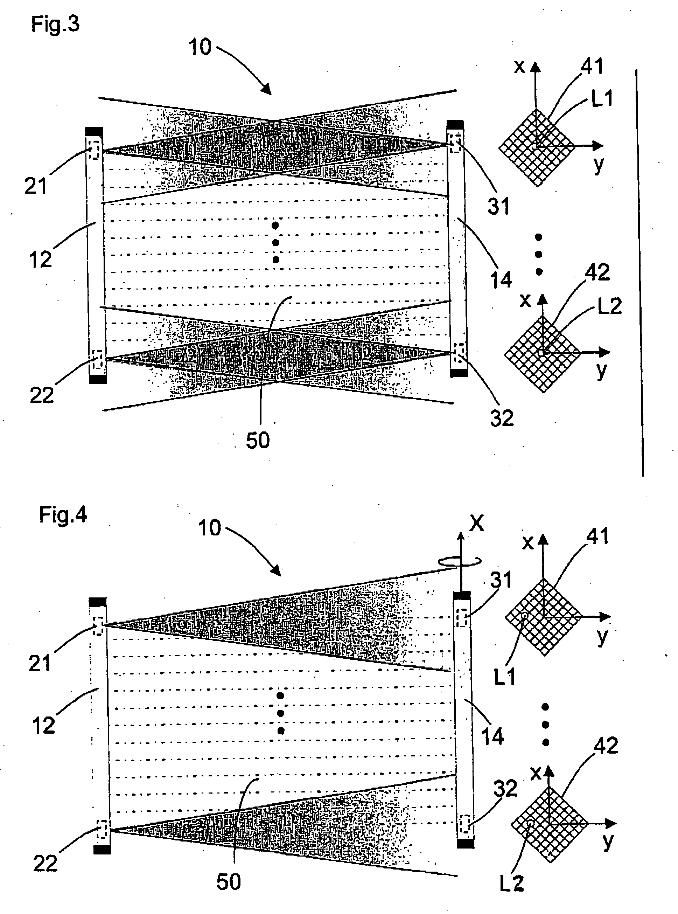

In den Figuren 3 bis 10 ist jeweils eine optoelektronische Sensoranordnung 10 dargestellt, welche eine Lichtsenderleiste 12 und eine Lichtempfängerleiste 14 aufweist. In der Lichtsenderleiste 12 sind mehrere Lichtsender angeordnet, von denen der Einfachheit halber lediglich zwei Lichtsender, nämlich ein Lichtsender 21 und ein Lichtsender 22 schematisch dargestellt sind. Grundsätzlich ist es möglich, dass lediglich diese beiden Lichtsender 21, 22 in der Lichtsenderleiste 12 angeordnet sind. Vorzugsweise sind jedoch mehrere, beispielsweise 100 bis 200 Lichtsender in der Lichtsendeleiste 12 nebeneinander angeordnet, was beispielsweise durch die Punkte in den Figuren 3 bis 8 angedeutet ist. In der Lichtempfängerleiste 14 sind mehrere Lichtempfänger angeordnet, von denen vorliegend der Einfachheit halber lediglich zwei Lichtempfänger, nämlich die Lichtempfänger 31, 32 schematisch dargestellt sind. Auch in der Lichtempfängerleiste 14 können lediglich diese beiden Lichtempfänger 31, 32 angeordnet sein. Vorzugsweise sind in der Lichtempfängerleiste 14 jedoch mehrere, insbesondere in etwa 100 bis etwa 200 Lichtempfänger angeordnet, was beispielsweise durch die Punkte in den Figuren 3 bis 8 angedeutet ist. Jeweils ein Lichtsender 21, 22 und ein Lichtempfänger 31, 32 bilden ein Lichtsender/Lichtempfängerpaar. Vorliegend bildet der Lichtsender 21 mit dem Lichtempfänger 31 und der Lichtsender 22 mit dem Lichtempfänger 32 jeweils ein Lichtsender/Lichtempfängerpaar.

Die Lichtsenderleiste 12 und die Lichtempfängerleiste 14 sind auf gegenüberliegenden Seiten eines Überwachungsbereichs 50 angeordnet und derart zueinander ausgerichtet, dass das von den Lichtsendern 21, 22 ausgesandte Licht den Überwachungsbereich 50 durchquert und auf die Lichtempfänger 31, 32 auftreffen kann.

Die Lichtsender 21, 22 senden Licht in einem sich aufweitenden Sendekegel $\alpha1$, $\alpha2$ in den Überwachungsbereich 50 aus. Die Lichtempfänger nehmen Licht aus einem Empfangskegel $\beta1$, $\beta2$ aus dem Überwachungsbereich 50 auf.

Die Lichtempfänger 31, 32 sind jeweils als ortsauflösendes Element 41, 42 ausgebildet, welche beispielsweise aus einer Matrixanordnung von mehreren lichtempfindlichen Elementen aufgebaut sind und beispielsweise als CCD-Sensor ausgebildet sind.

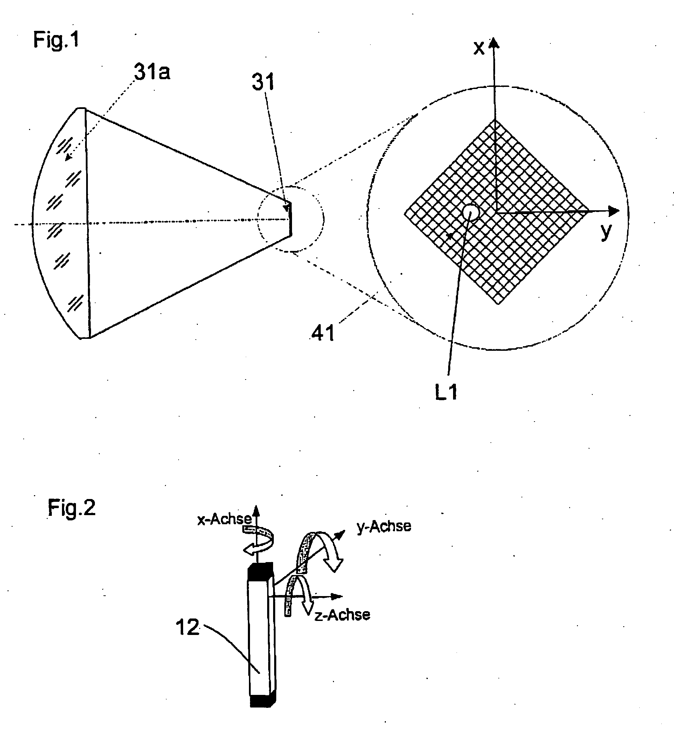

Figur 1 zeigt eine schematische Darstellung des Lichtempfängers 31 in einem Längsschnitt, wobei in der Ausschnittsvergrö-ßerung rechts in Figur 1 eine Draufsicht auf das ortsauflösende Element 41 des Lichtempfängers 31 dargestellt ist. Das ortsauflösende Element 41 weist beispielsweise eine Matrixanordnung aus 16 x 16 Bildpunkten auf. In den Figuren 3 bis 10 sind die ortauflösenden Elemente 41, 42 jedoch der Einfachheit halber mit weniger Bildpunkten, insbesondere als Matrixanordnung aus 8 x 8 lichtempfindlichen Elementen, dargestellt. Vor dem Lichtempfänger 31 ist, wie in Figur 1 zu sehen ist, eine Empfangsoptik 31a angeordnet, die das einfallende Licht auf den Lichtempfänger 31 bündelt. Auch die weiteren Lichtempfänger, insbesondere der Lichtempfänger 32, weisen, wie in den Figuren 3 bis 10 nicht dargestellt, eine entsprechende Empfangsoptik auf. In der Regel ist auch vor den Lichtsendern 21, 22 eine entsprechende Sendeoptik angeordnet.

Bei idealer Ausrichtung der Lichtsendeleiste 12 relativ zu der Lichtempfängerleiste 14 detektieren die Lichtempfänger 31, 32 jeweils das Licht von denen ihnen zugeordneten Lichtsendern 21, 22. Das von den Lichtsendern 21, 22 ausgesandte Licht erzeugt jeweils auf den ortsauflösenden Elementen 41, 42 einen Lichtauftreffpunkt L1, L2, welcher, wie in Figur 3 dargestellt, bei optimaler Ausrichtung jeweils mittig auf dem ortsauflösenden Element 41, 42 auftrifft. Diese Lagen werden insbesondere auch als Solllagen bezeichnet und können in einem Teach-In-Verfahren eingelernt werden. Dieses Verfahren wird beispielsweise beim Herstellungsprozess oder auch nach einer erfolgten Montage durchgeführt, bei welchem die Lichtsenderleiste 12 und die Lichtempfängerleiste 14 mit anderen Hilfsmitteln relativ zueinander ausgerichtet worden und die entsprechenden Lichtauftreffpunkte L1, L2 auf den ortauflösenden Elementen 41, 42 als Solllagen hinterlegt werden.

Die optoelektronische Sensoranordnung 10 weist eine nicht dargestellte Steuereinheit auf, in welcher Mittel zur Bestimmung des Lichtauftreffpunktes L1, L2 der Sendekegel $\alpha1$, $\alpha2$ jeweils eines der Lichtsender 31, 32 oder gegebenenfalls einer Fremdlichtquelle auf einem der Lichtempfänger 41, 42 vorhanden sind. Für jedes ortauflösende Element 41, 42 können somit Lichtauftreffpunkte verschiedener Lichtquellen unabhängig voneinander bestimmt werden.

Bei der Montage der optoelektronischen Sensoranordnung 10 müssen die Lichtsendeleiste 12 und die Lichtempfängerleiste 14 derart relativ zueinander ausgerichtet werden, dass das Licht eines Lichtsenders 21, 22 auf den zugehörigen Lichtempfänger 31, 32 jeweils eines Lichtsenders/Lichtempfängerpaares fällt.

Anhand der Figuren 4 bis 7 wird ein entsprechendes Ausrichtverfahren beschrieben.

In Figur 2 sind die unterschiedlichen Achsen dargestellt, entlang derer die Lichtempfängerleiste 14 relativ zu der Lichtsenderleiste 12 ausgerichtet werden muss. Als X-Achse ist dabei die Achse entlang der Längsrichtung der Lichtsenderleiste 12 definiert, welche auch durch die nebeneinander angeordneten Lichtsender 21, 22 vorgegeben ist. Als Z-Achse wird die Achse der Sendekegel $\alpha1$, $\alpha2$ der Lichtsender 21, 22 bzw. der Sendekegel $\beta1$, $\beta2$ der Lichtempfänger 31, 32 definiert. Als Y-Achse wird die Achse angesehen, welche sowohl senkrecht zur X-Achse als auch senkrecht zur Z-Achse steht. Ziel der Ausrichtung ist, dass die X- und Y-Achsen von Lichtsenderleiste 12 und Lichtempfängerleiste 14 parallel zueinander verlaufen und die Z-Achsen der verschiedenen Lichtsender/Lichtempfängerpaare ineinander fallen.

Figur 4 zeigt die optoelektronische Sensoranordnung 10 gemäß Figur 3, bei welcher die Lichtempfängerleiste 14 um die X-Achse verdreht ist. Dies äußert sich darin, dass die Lichtauftreffpunkte L1, L2 der Sendekegel α1, α2 der Lichtsender 21, 22 auf den zugehörigen ortsauflösenden Elementen 41, 42 der Lichtempfänger 31, 32 jeweils in die gleiche Richtung entlang der Y-Achse gegenüber den in Figur 3 dargestellten Solllagen verschoben sind. Ist die Abweichung für beide Lichtauftreffpunkte L1, L2 identisch, kann somit durch Drehung der Lichtempfängerleiste 14 um die X-Achse eine korrekte Ausrichtung und Justierung erreicht werden.

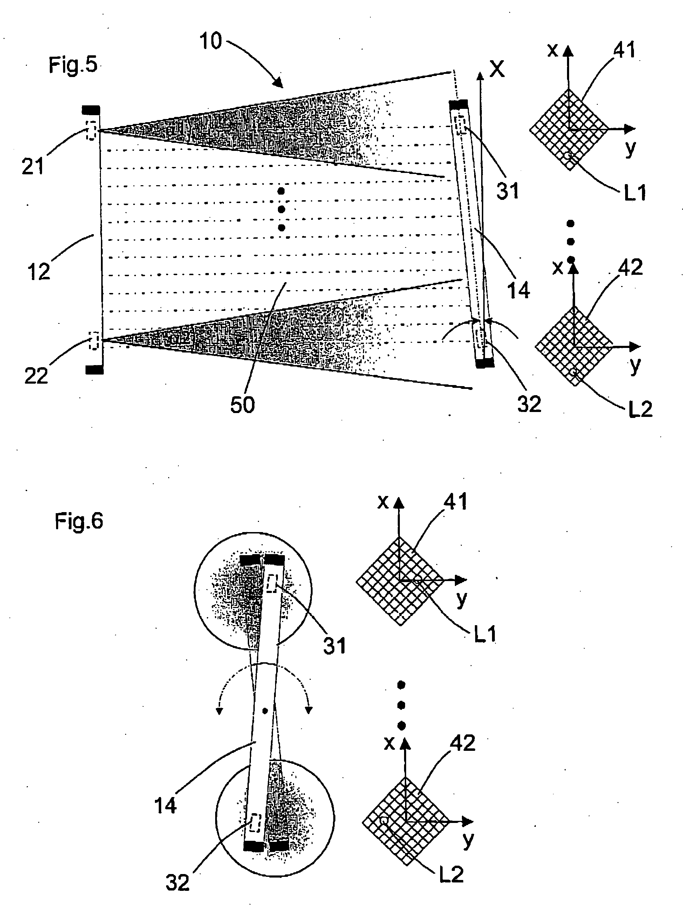

Figur 5 zeigt die optoelektronische Sensoranordnung 10 gemäß Figur 3, bei welcher die Lichtempfängerleiste 14 um die Y-Achse verdreht ist. Dies äußert sich in einer Abweichung der Lichtauftreffpunkte L1, L2 von den in Figur 3 dargestellten Solllagen entlang der X-Achse in die gleiche Richtung. Anhand der Lage der Lichtauftreffpunkte der L1, L2 relativ zu den in Figur 3 dargestellten Solllagen kann somit auf die Art der Verdrehung der Lichtempfängerleiste 14 gegenüber der gewünschten Sollposition geschlossen werden und diese entsprechend rückgängig gemacht werden, so dass bei Drehung um die Y-Achse die Lichtauftreffpunkte L1, L2 in Richtung auf die gewünschten Solllagen bewegt werden und bei Übereinstimmung die gewünschte optimale Ausrichtung erreicht ist.

Figur 6 zeigt die Lichtempfängerleiste 14 der optoelektronischen Sensoranordnung 10 gemäß Figur 3, bei welcher die Lichtempfängerleiste 14 um die Z-Achse verdreht gegenüber der Lichtsenderleiste 12 angeordnet ist. Dies äußert sich dadurch, dass der Lichtauftreffpunkt L1 des Lichtsenders 21 entlang der Y-Achse in eine Richtung verschoben ist, während der Lichtauftreffpunkt L2 des Lichtsenders 22 entlang der Y-Achse in die entgegengesetzte Richtung verschoben ist. Bei dieser Art der Abweichung der Lichtauftreffpunkte L1, L2 von den in Figur 3 dargestellten Solllagen kann somit wiederum auf die entsprechende Art der Dejustage der Lichtempfängerleiste 14 geschlossen werden und diese entsprechend korrigiert werden.

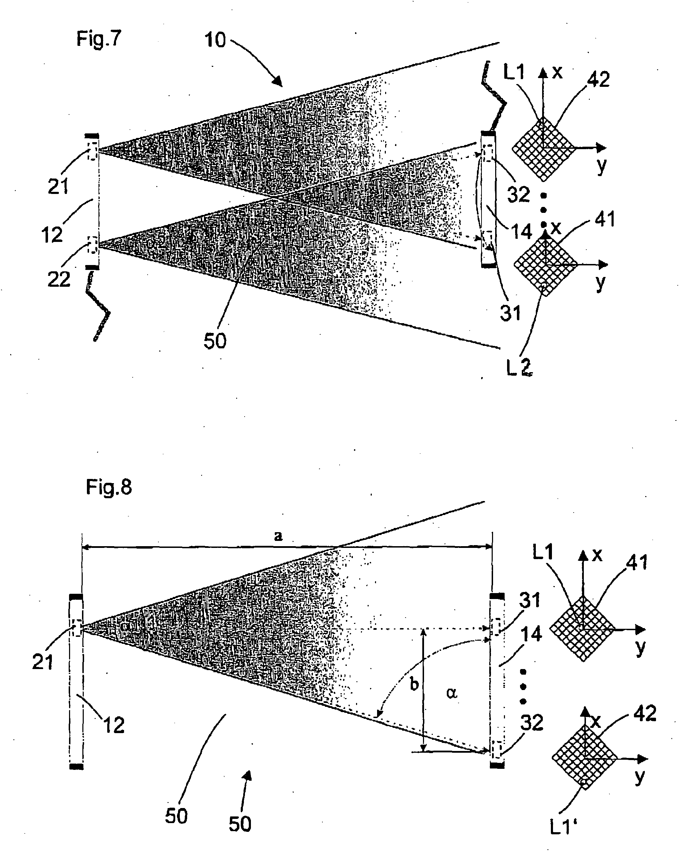

In Figur 7 ist die optoelektronische Sensoranordnung 10 gemäß Figur 3 derart dargestellt, dass die Lichtempfängerleiste 14 verkehrt herum montiert angeordnet ist. Der Sendekegel α1 des Lichtsenders 21 fällt somit nicht auf den Lichtempfänger 31, sondern auf den Lichtempfänger 32, während der Sendekegel α2 des Lichtsenders 22 nicht wie gewünscht auf den Lichtempfänger 32, sondern auf den Lichtempfänger 31 fällt. Eine derartige verdrehte Montage äußert sich darin, dass die Lichtauftreffpunkte L1, L2 entlang der X-Achse in entgegengesetzter Richtung verschoben sind. Anhand der Art der Abweichung der Lichtauftreffpunkte L1, L2, von denen in Figur 3 dargestellten Solllagen kann somit wiederum auf die Art der Dejustage der Lichtempfängerleiste 14 relativ zu der Lichtsenderleiste 12 geschlossen werden und diese entsprechend korrigiert werden.

In der Regel liegt bei einer Montage eine Überlagerung von Dejustagen in verschiedenen Achsen vor, was jedoch sukzessive durch Überprüfung der Lichtauftreffpunkte L1, L2 auf den jeweiligen ortsauflösenden Elementen 41, 42 schrittweise rückgängig gemacht werden kann. Insbesondere kann in einem ersten Schritt überprüft werden, ob eine verdrehte Montage der Lichtempfängerleiste 14 relativ zur Lichtsenderleiste 12 vorliegt. Anschließend kann in drei aufeinander folgenden Schritten geprüft werden, ob eine Verdrehung um die X-Achse, die Y-Achse oder die Z-Achse vorliegt. Die Reihenfolge der Überprüfung der Verdrehung in den einzelnen Achsen ist dabei in der Regel beliebig.

Zur Erhöhung der Zuverlässigkeit der Ausrichtung können, falls mehr als zwei Lichtsender/Lichtempfängerpaare vorhanden sind, zeitlich versetzt zueinander jeweils zwei beliebige Lichtsender/Lichtempfängerpaare ausgewählt und diese auf die entsprechende Dejustage hin überprüft werden.

Das Verfahren zur Justierung kann entweder anlassbezogen, beispielsweise lediglich bei der Montage der optoelektronischen Sensoranordnung 10 oder auch zyklisch wiederkehrend, beispielsweise im Abstand von einigen Tagen oder Wochen, durchgeführt werden, um einerseits bei der Montage einer korrekten Ausrichtung der Lichtsenderleiste 12 relativ zur Lichtempfängerleiste 14 zu gewährleisten, andererseits auch beim Betrieb der optoelektronischen Sensoranordnung 10 in regelmäßigen Abständen zu überprüfen, ob gegebenenfalls durch Stöße oder Vibrationen eine Dejustage stattgefunden hat.

In Figur 8 ist schematisch das Verfahren zur Bestimmung eines Abstandes a zwischen der Lichtsendeleiste 12 und der Lichtempfängerleiste 14 dargestellt. Zur Bestimmung des Abstands a wird ein Lichtsender/Lichtempfängerpaar benötigt, beispielsweise der Lichtsender 21 und der Lichtempfänger 31, welcher nachfolgend als erster Lichtempfänger 31 bezeichnet wird, und gleichzeitig ein weiterer Lichtempfänger, insbesondere der Lichtempfänger 32, welcher nachfolgend als zweiter Lichtempfänger bezeichnet wird, aktiviert. Die Lichtempfänger 31, 32 sind in einem Abstand b zueinander auf der Lichtempfängerleiste 14 angeordnet. Der Abstand b sollte dabei derart bemessen sein, dass der Sendekegel α1 des Lichtsenders 21 beide Lichtempfänger 31, 32 umfasst. Die Lichtsenderleiste 12 und die Lichtempfängerleiste 14 sind optimal zueinander ausgerichtet, so dass der Lichtauftreffpunkt L1 des Sendekegels α1 des Lichtsenders 21 im Wesentlichen mittig und unter einem Einfallswinkel von 90° auf das ortauflösende Element 41 des Lichtempfängers 31 auftrifft. Das von dem Lichtsender 21 ausgesandte Licht fällt jedoch unter einem Einfallswinkel α auf den zweiten Lichtempfänger 32 in einem Lichtauftreffpunkt L1 auf. Dadurch ergibt sich eine Abweichung in X-Richtung von der Lage des Lichtauftreffpunktes, welcher von dem zu dem zweiten Lichtempfänger 32 zugehörigen Lichtsender 22 bei senkrechtem Lichteinfall entstehen würde und welcher eine entsprechende Solllage charakterisiert, welche mit der Lage des Lichtauftreffpunktes L1 auf dem ortsauflösenden Element 41 übereinstimmen würde. Je größer die Abweichung des Lichtauftreffpunktes L1' vom von der Solllage, desto kleiner ist der Einfallswinkel α des Sendekegels α1 des Lichtsenders 21. Aus der Abweichung des Lichtauftreffpunktes L1' von der Solllage und somit aus den relativen Lagen der Lichtauftreffpunkte L1', L1 bei rechnerischer Projektion beider Lichtauftreffpunkte L1', L1 auf ein ortsauflösendes Element kann somit der Einfallswinkel α bestimmt werden. Ist der Einfallswinkel α des Sendekegels α1 des Lichtsenders 21 auf den zweiten Lichtempfänger 32 bekannt, kann der Abstand a zwischen dem Lichtsender 21 und dem ersten Lichtempfänger 31 auf folgende Art und Weise berechnet werden:

$$a = b \times \tan\alpha.$$

Der Abstand a zwischen dem Lichtsender 21 und dem ersten Lichtempfänger 31 und somit bei korrekter Ausrichtung der Lichtsendeleiste 12 zu der Lichtempfängerleiste 14 zwischen der Lichtsenderleiste 12 und der Lichtempfängerleiste 14 kann somit auf einfache Art und Weise bestimmt werden. Insbesondere ist lediglich ein Lichtsender/Lichtempfängerpaar und ein weiterer Lichtempfänger zur Bestimmung des Abstandes a vonnöten. Um dem Abstand a mit größerer Genauigkeit und besonders zuverlässig bestimmen zu können, werden vorzugsweise zeitlich versetzt zueinander verschiedene Lichtsender/Lichtempfängerpaare zur Bestimmung des Abstands a herangezogen. Insbesondere ist auch eine Mittelung der für verschiedene Lichtsender/Lichtempfängerpaare ermittelten Werte des Abstands a zur Erzielung einer größeren Genauigkeit möglich.

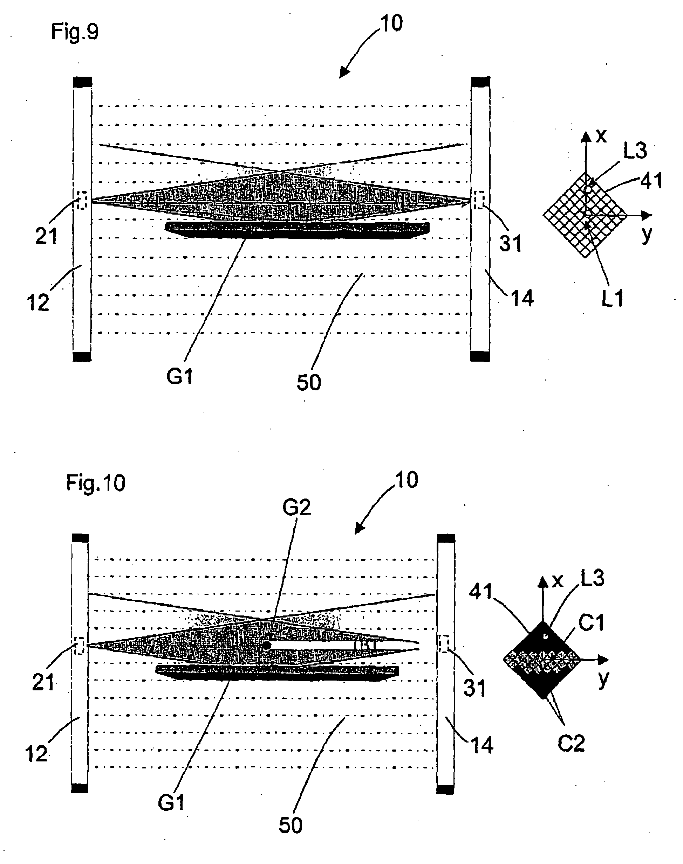

Die Figuren 9 und 10 zeigen schematisch den Überwachungsmodus, welcher bei der Überwachung des Überwachungsbereichs 50 durchgeführt werden kann, um zu bestimmen, ob Gegenstände zulässigerweise oder unzulässigerweise in den Überwachungsbereich 50 eingedrungen sind.

In Figur 9 ist ein Objekt G1 dargestellt, welches sich in dem Überwachungsbereich 50 zwischen der Lichtsenderleiste 12 und der Lichtempfängerleiste 14 befindet. Das Objekt G1 hat eine spiegelnde Oberfläche, so dass zusätzlich zu dem direkten Lichtauftreffpunkt L1 des Sendekegels α1 des Lichtsenders 21 auf dem ortsauflösenden Element 41 des Lichtempfängers 31 ein weiterer Lichtauftreffpunkt L3 durch Reflexion des Sendekegels α1 des Lichtsenders 21 an der spiegelnden Oberfläche des Objekts G1 auf dem ortsauflösenden Element 41 des Lichtempfängers 31 erzeugt wird. Dabei fallen die beiden Lichtauftreffpunkte L1, L3 nicht zusammen. Das Objekt G1 bildet somit eine zusätzliche Lichtquelle, von welcher Licht auf das ortsauflösende Element 41 auftrifft. Die Steuereinheit der Sensoranordnung 10 ist derart ausgelegt, dass Licht, welches von verschiedenen Lichtquellen auf ein ortsauflösendes Element 41, 42 auftrifft, unabhängig voneinander detektiert werden kann. Für jedes ortsauflösende Element 41, 42 ist die Solllage des Lichtauftreffpunktes L1 des zugehörigen Lichtsenders 21, 22 hinterlegt. Ermittelt das ortsauflösende Element 41 den Lichtauftreffpunkt L3 als weiteren Lichtauftreffpunkt, muss überprüft werden, ob dieser zulässig oder unzulässig ist. Zulässige Lichtauftreffpunkte können beispielsweise erzeugt werden, falls das Objekt G1 zulässigerweise in den Überwachungsbereich 50 eingedrungen ist, beispielsweise im Rahmen einer überprüfenden Automatisierungsanlage oder eines zu überwachenden Förderbandes, auf welchem die Objekte G1 transportiert werden, oder auch durch zusätzliche Lichtquellen in der Umgebung des Überwachungsbereichs 50, welche nicht ausgeschaltet oder abgeblendet werden können. Im Rahmen eines Teach-In-Verfahrens können derartige zulässige Lichtauftreffpunkte zusätzlich in der Steuereinheit hinterlegt werden. Falls ein weiterer Lichtauftreffpunkt L3 von den Solllagen der zulässigen Lichtauftreffpunkte abweicht, kann dadurch ermittelt werden, ob das Objekt G1, welches den weiteren Lichtauftreffpunkt L3 erzeugt, zulässigerweise in den Überwachungsbereich 50 eingedrungen ist oder ob es sich um ein unzulässiges Eindringen handelt. Aufgrund der getrennten Auswertung der unterschiedlichen Lichtquellen und somit der verschiedenen Lichtauftreffpunkte L1, L3 wird eine erhöhte Sicherheit dahingehend gewährleistet, ob Objekte G1 zulässigerweise oder unzulässigerweise in den Überwachungsbereich 50 eingedrungen sind.

Figur 10 zeigt zusätzlich zu dem erlaubten Objekt G1 gemäß Figur 9 ein unerlaubtes Objekt G2, welches sich in dem Lichtweg zwischen den Lichtsender 21 und dem Lichtempfänger 31 befindet. Auf dem ortsauflösenden Element 41 wird wiederum der Lichtauftreffpunkt L3 detektiert, welcher durch die Reflexion des Sendekegels α1 an der spiegelnden Oberfläche des zulässigen Objektes G1 erzeugt wird. Das Objekt G2 schattet allerdings den Lichtauftreffpunkt L1 des Sendekegels α1 des Lichtsenders 21 auf dem ortauflösenden Element 41 vollständig ab. Anhand des Fehlens des Lichtauftreffpunktes L1, welcher bei dem erlaubten Objekt G1 noch vorhanden ist, kann darauf geschlossen werden, dass der Lichtauftreffpunkt L3, welcher prinzipiell noch darauf hinweisen könnte, dass der Lichtweg zwischen dem Lichtsender 21 und dem Lichtempfänger 31 nicht unterbrochen ist, lediglich eine Umspiegelung eines unerlaubter Weise in den Überwachungsbereich 50 eingedrungenen Objektes G2 bedeutet. Der einzig detektierte Lichtauftreffpunkt L3 weicht somit von den erwarteten Solllagen von Lichtauftreffpunkten ab. Anhand der relativen Lagen der auf dem ortsauflösenden Element 41 detektierten verschiedenen Lichtauftreffpunkte L1, L3 zu entsprechenden Solllagen, vorliegend der Lage des Lichtauftreffpunkts L3, kann somit ermittelt werden, ob das Objekt G1, G2 zulässigerweise oder unzulässigerweise in den Überwachungsbereich 50 eingedrungen ist oder ob gegebenenfalls ein Lichteintrag aus einer erlaubten oder unerlaubten Fremdlichtquelle vorliegt.

Insbesondere können auf dem ortsauflösenden Element 41 Bereiche C1, C2 definiert werden, wobei bei Lage der Lichtauftreffpunkte L1, L3 in bestimmten Bereichen C1, C2 darauf geschlossen werden kann, ob eine erlaubte oder ein unerlaubtes Eindringen eines Objektes G2 in den Überwachungsbereich 50 vorliegt. Die entsprechenden Bereiche C1, C2 können beispielweise im Rahmen eines Teach-In-Verfahrens ermittelt werden. Dieses kann entweder beim Herstellungsprozess oder nachdem die optoelektronische Sensoranordnung 10 an ihrem Einsatzort montiert wurde, durchgeführt werden, um nicht nur die Lichtauftreffpunkte der zu den Lichtempfängern 31, 32 zugehörigen Lichtsender 21, 22 zu berücksichtigen, sondern um auch in der Nähe des Überwachungsbereichs 50 vorhandene Fremdlichtquellen, die einen zulässigen Lichtauftreffpunkt auf den ortsauflösenden Elementen 41, 42 erzeugen, berücksichtigen zu können.

Im vorliegenden Beispiel müsste der Lichtauftreffpunkt L1 in dem Bereich C1 zu liegen kommen, um anzuzeigen, dass der Lichtweg zwischen dem Lichtsender 21 und dem Lichtempfänger 31 nicht unterbrochen ist. Die Lage des Lichtauftreffpunktes L3 in dem Bereich C2 außerhalb des Bereichs C1 und das Fehlen des Lichtauftreffpunkts L1 in dem Bereich C1 zeigt jedoch an, dass lediglich ein Lichtreflex an einem zulässigerweise in dem Überwachungsbereich 50 vorhandenen Objekt G1 vorliegt, dieser Reflex jedoch das unzulässigerweise in den Überwachungsbereich 50 eingedrungene Objekt G2 umspiegelt. Auch bei diesem Verfahren ermöglicht die separate Auswertung der Lichtauftreffpunkte L1, L3 verschiedener Lichtquellen eine zuverlässige Aussage darüber, ob die Objekte G1, G2 erlaubterweise oder unerlaubterweise in den Überwachungsbereich 50 eingedrungen sind. Dieses Überwachungsverfahren wird insbesondere während des regulären Betriebs der optoelektronischen Sensoranordnung 10 regelmäßig durchgeführt. Dabei können wiederum zyklisch zeitlich versetzt zueinander verschiedene Lichtsender/Lichtempfängerpaare zur Bestimmung, ob Objekte G1, G2 zulässigerweise oder unzulässigerweise in den Überwachungsbereich 50 eingedrungen sind, herangezogen werden.

In die Steuereinheit der optoelektronischen Sensoranordnung 10 sind insbesondere Mittel integriert, die sowohl die Ermittlung des Abstandes a als auch die Justierung der Lichtempfängerleiste 14 relativ zu der Lichtsenderleiste 12 und die Überprüfung, ob erlaubte oder unerlaubte Umspiegelungen bzw. Fremdlichteinträge vorliegen, ermöglicht, wobei die unterschiedlichen Verfahren insbesondere zyklisch oder anlassbezogen, beispielsweise bei der Montage oder nach Wartung der optoelektronischen Sensoranordnung 10, durchgeführt werden.

Bezugszeichenliste

| 10 | Sensoranordnung |
| 12 | Lichtsenderleiste |
| 14 | Lichtempfängerleiste |
| 21 | Lichtsender |
| 22 | Lichtsender |
| 31 | Lichtempfänger |
| 31a | Empfangsoptik |
| 32 | Lichtempfänger |
| 41 | ortsauflösendes Element |
| 42 | ortsauflösendes Element |
| 50 | Überwachungsbereich |

| L1 | Lichtauftreffpunkt |
| L1' | Lichtauftreffpunkt |
| L2 | Lichtauftreffpunkt |
| L3 | Lichtauftreffpunkt |

| G1 | Objekt |
| G2 | Objekt |

| $\alpha 1$ | Sendekegel |
| $\alpha 2$ | Sendekegel |

| $\beta 1$ | Empfangskegel |
| $\beta 2$ | Empfangskegel |

| X | Achse |
| Y | Achse |
| Z | Achse |

| $\alpha$ | Einfallswinkel |

| a | Abstand |
| b | Abstand |

| C1 | Bereich |
| C2 | Bereich |

**Patentansprüche**

1. Optoelektronische Sensoranordnung (10) mit mehreren in einer Lichtsenderleiste (12) nebeneinander angeordneten Lichtsendern (21, 22), welche jeweils Licht in einen Sendekegel ($\alpha 1$, $\alpha 2$) in einen Überwachungsbereich (50) abstrahlen, und mit mehreren in einer Lichtempfängerleiste (14) nebeneinander angeordneten Lichtempfängern (31, 32), welche Licht aus einem Empfangskegel ($\beta 1$, $\beta 2$) aus dem Überwachungsbereich (50) aufnehmen und welche jeweils ein ortsauflösendes Element (41, 42) aufweisen, wobei jeweils ein Lichtsender (21, 22) mit einem Lichtempfänger (31, 32) ein Lichtsender/Lichtempfängerpaar bildet,

**dadurch gekennzeichnet, dass** eine Steuereinheit vorhanden ist, in welcher Mittel zur Bestimmung des Lichtauftreffpunktes (L1, L1', L2, L3) des Sendekegels (α1, α2) jeweils eines der Lichtsender (21, 22) und/oder einer Fremdlichtquelle (G1) auf einem der Lichtempfänger (31, 32) vorhanden sind und dass die Steuereinheit Mittel zur Durchführung eines Abstandsermittlungsmodus aufweist, bei welchem für einen ersten (31) und einen zweiten der Lichtempfänger (32) der Lichtauftreffpunkt (L1, L1') des Sendekegels (α1) des Lichtsenders (21) bestimmt wird, welcher mit dem ersten Lichtempfänger (31) ein Lichtsender/Lichtempfängerpaar bildet, wobei aus den relativen Lagen der Lichtauftreffpunkte (L1, L1') auf den beiden Lichtempfängern (31, 32) der Einfallswinkel (α) auf den zweiten Lichtempfänger (32) bestimmt wird, und wobei aus dem Einfallswinkel (α) und dem Abstand (b) zwischen den beiden Lichtempfängern (31, 32) der Abstand (a) zwischen dem ersten Lichtempfänger (31) und dem zugehörigen Lichtsender (21) bestimmt wird.

2. optoelektronische Sensoranordnung nach Anspruch 1,
**dadurch gekennzeichnet, dass** über die Steuereinheit jeder Lichtsender (21, 22) und jeder Lichtempfänger (31, 32) unabhängig voneinander ansteuerbar ist.

3. Optoelektronische Sensoranordnung nach einem der vorhergehenden Ansprüche,
**dadurch gekennzeichnet, dass** die ortsauflösenden Lichtempfänger (41, 42) aus einer Matrixanordnung von mehreren lichtempfindlichen Elementen, vorzugsweise aus einem CCD-Sensor oder einem CMOS-Bildsensor, bestehen.

4. Optoelektronische Sensoranordnung nach einem der vorhergehenden Ansprüche,
**dadurch gekennzeichnet, dass** die Steuereinheit Mittel zur Durchführung eines Justierungsmodus aufweist, bei welchem für zwei der Lichtsender/Lichtempfängerpaare der Lichtauftreffpunkt (L1, L2) des Sendekegels (α1, α2) des Lichtsenders (21, 22) auf dem zugehörigen Lichtempfänger (31, 32) bestimmt wird, wobei aus den relativen Lagen der Lichtauftreffpunkte (L1, L2) auf den beiden Lichtempfängern (31, 32) zu einer Solllage, welcher der optimalen Justierung entspricht, auf die Art der Dejustierung geschlossen wird.

5. Optoelektronische Sensoranordnung nach einem der vorhergehenden Ansprüche,
**dadurch gekennzeichnet, dass** die Steuereinheit Mittel zur Durchführung eines Überwachungsmodus aufweist, bei welchem für jeweils ein Lichtsender/Lichtempfängerpaar der Lichtauftreffpunkt (L1) des Sendekegels (α1) des Lichtsenders (21) auf dem zugehörigen Lichtempfänger (31) bestimmt wird und geprüft wird, ob durch eine Umspiegelung oder durch Fremdlicht ein weiterer Lichtauftreffpunkt (L3) auf demselben Lichtempfänger (31) erzeugt wird, wobei, falls ein zweiter Lichtauftreffpunkt (L3) auf dem Lichtempfänger (31) vorhanden sein sollte, aus den relativen Lagen der Lichtauftreffpunkte (L1, L3) auf dem Lichtempfänger (31) zu vorgegebenen Solllagen geschlossen werden kann, ob eine erlaubte oder eine unerlaubte Umspiegelung bzw. ein Fremdlichteintrag vorliegt.

6. Verfahren zur Überwachung eines Überwachungsbereichs (50) mit mehreren in einer Lichtsenderleiste (12) nebeneinander angeordneten Lichtsendern (21, 22), welche jeweils Licht in einen Sendekegel (α1, α2) in den Überwachungsbereich (50) abstrahlen, und mit mehreren in einer Lichtempfängerleiste (14) nebeneinander angeordneten Lichtempfängern (31, 32), welche Licht aus einem Empfangskegel (β1, β2) aus dem Überwachungsbereich (50) aufnehmen und welche jeweils ein ortsauflösendes Element (41, 42) aufweisen, wobei jeweils ein Lichtsender (21, 22) mit einem Lichtempfänger (31, 32) ein Lichtsender/Lichtempfängerpaar bildet, wobei in einem Abstandsermittlungsmodus für einen ersten (31) und einen zweiten der Lichtempfänger (32) der Lichtauftreffpunkt (L1, L1') des Sendekegels (α1) des Lichtsenders (L1) bestimmt wird, welcher mit dem ersten Lichtempfänger (31) ein Lichtsender/Lichtempfängerpaar bildet, wobei aus den relativen Lagen der Lichtauftreffpunkte (L1, L1') auf den beiden Lichtempfängern (31, 32) der Einfallswinkel (α) auf den zweiten Lichtempfänger (32) bestimmt wird, und wobei aus dem Einfallswinkel (α) und dem Abstand (b) zwischen den beiden Lichtempfängern der Abstand (a) zwischen dem ersten Lichtempfänger (31) und dem zugehörigen Lichtsender (21) bestimmt wird.

7. Verfahren nach Anspruch 6,
**dadurch gekennzeichnet, dass** in dem Abstandsermittlungsmodus zur Bestimmung des Abstands (a) zeitlich versetzt verschiedene Lichtsender/Lichtempfängerpaare verwendet werden.

8. Verfahren nach Anspruch 6 oder 7,
**dadurch gekennzeichnet, dass** in einem Justierungsmodus für zwei der Lichtsender/Lichtempfängerpaare der Lichtauftreffpunkt (L1, L2) des Sendekegels (α1, α2) des Lichtsenders (21, 22) auf dem zugehörigen Lichtempfänger (31, 32) bestimmt wird, wobei aus den relativen Lagen der Lichtauftreffpunkte (L1, L2) auf den beiden Lichtempfängern (31, 32) zu Solllagen, welche der optimalen Justierung entsprechen, auf die Art der Dejustierung geschlossen wird.

9. Verfahren nach Anspruch 8,
**dadurch gekennzeichnet, dass** eine X-Achse (X) durch die nebeneinander angeordneten Lichtsender (21, 22) definiert ist, dass eine Z-Achse (Z) durch die Symmetrieachse des Sendekegels ($\alpha$1, $\alpha$2) definiert ist und eine Y-Achse (Y) senkrecht zur X-Achse (X) und zur Z-Achse (Z) gegeben ist, und dass bei Abweichung der Lichtauftreffpunkte (L1, L2) beider Sendekegel ($\alpha$1, $\alpha$2) der Lichtsender (21, 22) von der Solllage in die gleiche Richtung entlang der Y-Achse (Y) auf eine Verdrehung der Lichtempfängerleiste (14) um die X-Achse (X) geschlossen werden kann, dass bei Abweichung der Lichtauftreffpunkte (L1, L2) beider Sendekegel ($\alpha$1, $\alpha$2) der Lichtsender (21, 22) von der Solllage in die gleiche Richtung entlang der X-Achse (X) auf eine Verdrehung der Lichtempfängerleiste (14) um die Y-Achse (Y) geschlossen werden kann, dass bei Abweichung der Lichtauftreffpunkte (L1, L2) beider Sendekegel ($\alpha$1, $\alpha$2) der Lichtsender (21, 22) von der Solllage in entgegengesetzte Richtung entlang der Y-Achse (Y) auf eine Verdrehung der Lichtempfängerleiste (14) um die Z-Achse (Z) geschlossen werden kann und dass bei Abweichung der Lichtauftreffpunkte (L1, L2) beider Sendekegel ($\alpha$1, $\alpha$2) der Lichtsender (21, 22) von der Solllage in entgegengesetzte Richtung entlang der X-Achse (X) auf eine verdrehte Montage der Lichtempfängerleiste (14) geschlossen werden kann.

10. Verfahren nach Anspruch 8 oder 9,
**dadurch gekennzeichnet, dass** in dem Justierungsmodus zur Bestimmung der Dejustierung zeitlich versetzt verschiedene Lichtsender/Lichtempfängerpaare verwendet werden.

11. Verfahren nach Anspruch 8 oder 9 oder 10,
**dadurch gekennzeichnet, dass** die Solllagen mittels eines Teach-In-Verfahrens ermittelbar sind.

12. Verfahren nach einem der Ansprüche 6 bis 11,
**dadurch gekennzeichnet, dass** in einem Überwachungsmodus für jeweils ein Lichtsender/Lichtempfängerpaar der Lichtauftreffpunkt (L1) des Sendekegels ($\alpha$1) des Lichtsenders (21) auf dem zugehörigen Lichtempfänger (31) bestimmt wird und geprüft wird, ob durch eine Umspiegelung oder durch eine Fremdlichtquelle ein weiterer Lichtauftreffpunkt (L3) auf demselben Lichtempfänger (31) erzeugt wird, wobei, falls ein zweiter Lichtauftreffpunkt (L3) auf dem Lichtempfänger (31) vorhanden sein sollte, aus den relativen Lagen der Lichtauftreffpunkte (L1, L3) auf dem Lichtempfänger (31) zu vorgegebenen Solllagen geschlossen werden kann, ob eine erlaubte oder eine unerlaubte Umspiegelung bzw. ein Fremdlichteintrag vorliegt.

13. Verfahren nach Anspruch 12,
**dadurch gekennzeichnet, dass** in dem Überwachungsmodus zur Bestimmung, ob eine erlaubte oder eine unerlaubte Umspiegelung bzw. ein Fremdlichteintrag vorliegt, zeitlich versetzt verschiedene Lichtsender/Lichtempfängerpaare verwendet werden.

14. Verfahren nach Anspruch 12 oder 13,
**dadurch gekennzeichnet, dass** die Solllagen mittels eines Teach-In-Verfahrens ermittelbar sind.

## Claims

1. An optoelectronic sensor arrangement (10) including several light emitters (21, 22) arranged next to each other in a light emitter strip (12), with each of said light emitters emitting light in an emission cone ($\alpha$1, $\alpha$2) into a monitoring area (50), and including several light receivers (31, 32) arranged next to each other in a light receiver strip (14), said light receivers receiving light from a reception cone ($\beta$1, $\beta$2) from the monitoring area (50) and each having a spatial resolution element (41, 42), each light emitter (21, 22) forming, together with a light receiver (31, 32), a light emitter/receiver pair, **characterised in that** a control unit is provided, in which means for determining the light incidence point (L1, L1', L2, L3) of the emission cone ($\alpha$1, $\alpha$2) of respectively one of the light emitters (21, 22) and/or of an external light source (G1) are present on one of the light receivers (31, 32), and **in that** the control unit has means for carrying out a distance detection mode, wherein for a first (31) and a second (32) of the light receivers the light incidence point (L1, L1') of the emission cone ($\alpha$1) of the light emitter (21) that forms a light emitter/receiver pair with the first light receiver (31) is determined, wherein the angle of incidence ($\alpha$) onto the second light receiver (32) is determined from the relative positions of the light incidence points (L1, L1') onto the two light receivers (31, 32) and wherein the distance (a) between the first light receiver (31) and the associated light emitter (21) is determined from the angle of incidence ($\alpha$) and the distance (b) between the two light receivers (31, 32).

2. The optoelectronic sensor arrangement as claimed in Claim 1, **characterised in that** each light emitter (21, 22) and each light receiver (31, 32) can be independently controlled via the control unit.

3. The optoelectronic sensor arrangement as claimed in any one of the preceding claims, **characterised in that** the spatial resolution light receivers (41, 42) consist of a matrix arrangement of several light-sensitive elements, preferably from a CCD sensor or from a CMOS image sensor.

4. The optoelectronic sensor arrangement as claimed in any one of the preceding claims, **characterised in that** the control unit includes means for operating in an adjustment mode, wherein the light incidence point (L1, L2) of the emission cone (($\alpha$1, $\alpha$2) of the light emitter (21, 22) onto the associated light receiver (31, 32) is determined for two of the light emitter/receiver pairs, wherein a conclusion as to the type of misalignment is made from the relative positions of the light incidence points (L1, L2) onto the two light receivers (31, 32) in relation to a set position that corresponds to an optimal adjustment.

5. The optoelectronic sensor arrangement as claimed in any one of the preceding claims, **characterised in that** the control unit includes means for operating in a monitoring mode, wherein the light incidence point (L1) of the emission cone ($\alpha$1) of the light emitter (21) onto the associated light receiver (31) is determined for respectively one light emitter/receiver pair and a check is carried out as to whether a further light incidence point (L3) on the same light receiver (31) is generated by a deflection or by external light, wherein, if a second light incidence point (L3) onto the light receiver (31) is present, a conclusion as to whether an admissible or an inadmissible deflection or an entry of external light is present can be made from the relative positions of the light incidence points (L1, L3) onto the light receiver (31) in relation to specified set positions.

6. A method for monitoring a monitoring area (50) including several light emitters (21, 22) arranged next to each other in a light emission strip (12), each of said light emitters emitting light in an emission cone ($\alpha$1, $\alpha$2) into the monitoring area (50), and including several light receivers (31, 32) arranged next to each other in a light receiver strip (14), said light receivers receiving light from a reception cone ($\beta$1, $\beta$2) from the monitoring area (50) and each having respectively one spatial resolution element (41, 42), with respectively one light emitter (21, 22) forming, with a light receiver (31, 32), a light emitter/receiver pair, wherein in a distance determination mode for a first (31) and a second (32) of the light receivers, the light incidence point (L1, L1') of the emission cone ($\alpha$1) of the light emitter (L1) is determined that forms a light emitter/receiver pair with the first light receiver (31), wherein the angle of incidence ($\alpha$) onto the second light receiver (32) is determined from the relative positions of the light incidence points (L1, L1') onto the two light receivers (31, 32) and wherein the distance (a) between the first light receiver (31) and the associated light emitter (21) is determined from the

angle of incidence ($\alpha$) and the distance (b) between the two light receivers.

7. The method as claimed in Claim 6, **characterised in that** in the distance determination mode for determining the distance (a), various light emitter/receiver pairs are used with a time delay.

8. The method as claimed in Claim 6 or 7, **characterised in that** in an adjustment mode, the light incidence point (L1, L2) of the emission cone ($\alpha$1, $\alpha$2) of the light emitter (21, 22) onto the associated light receiver (31, 32) is determined for two of the light emitter/receiver pairs, wherein a conclusion as to the type of misalignment is made from the relative positions of the light incidence points (L1, L2) onto the two light receivers (31, 32) in relation to set positions that correspond to an optimal adjustment.

9. The method as claimed in Claim 8, **characterised in that** an X axis (X) is defined by the light emitters (21, 22) arranged next to each other, **in that** a Z axis (Z) is defined by the axis of symmetry of the emission cone ($\alpha$1, $\alpha$2) and a Y axis (Y) extends vertically to the X axis (X) and to the Z axis (Z), and **in that** in the case of a deviation of the light incidence points (L1, L2) of both emission cones ($\alpha$1, $\alpha$2) of the light emitters (21, 22) from the set position in the same direction along the Y axis (Y), a conclusion as to a torsion of the light receiver strip (14) about the X axis (X) can be made, **in that** in the case of a deviation of the light incidence points (L1, L2) of both emission cones ($\alpha$1, $\alpha$2) of the light emitters (21, 22) from the set position in the same direction along the X axis (X), a conclusion as to a torsion of the light receiver strip (14) about the Y axis (Y) can be made, **in that** in the case of a deviation of the light incidence points (L1, L2) of both emission cones ($\alpha$1, $\alpha$2) of the light emitters (21, 22) from the set position in the opposite direction along the Y axis (Y), a conclusion as to a torsion of the light receiver strip (14) about the Z axis (Z) can be made, and **in that** in the case of a deviation of the light incidence points (L1, L2) of both emission cones ($\alpha$1, $\alpha$2) of the light emitters (21, 22) from the set position in the opposite direction along the X axis (X), a conclusion as to a distorted mounting of the light receiver strip (14) can be made.

10. The method as claimed in Claim 8 or 9, **characterised in that** in the adjustment mode for determining the misalignment, various light emitter/receiver pairs may be used with a time delay.

11. The method as claimed in Claim 8 or 9 or 10, **characterised in that** the set positions can be determined using a teach-in method.

12. The method as claimed in any one of Claims 6 to 11, **characterised in that** in a monitoring mode, the light incidence point (L1) of the emission cone (α1) of the light emitter (21) onto the associated light receiver (31) is determined for respectively one light emitter/receiver pair and a check is carried out as to whether a further light incidence point (L3) onto the same light receiver (31) is generated by a deflection or by an external light source, wherein, in case a second light incidence point (L3) onto the light receiver (31) is present, a conclusion as to whether an admissible or an inadmissible deflection or an entry of external light is present can be made from the relative positions of the light incidence points (L1, L3) onto the light receiver (31) in relation to specified set positions.

13. The method as claimed in Claim 12, **characterised in that** in the monitoring mode for determining whether an admissible or an inadmissible deflection or an entry of external light is present, various light emitter/receiver pairs may be used with a time delay.

14. The method as claimed in Claim 12 or 13, **characterised in that** the set positions may be determined using a teach-in method.


**Revendications**

1. Dispositif de capteur optoélectronique (10), comportant plusieurs photoémetteurs (21, 22) juxtaposés dans une barrette de photoémetteurs (12), émettant de la lumière dans un cône d'émission (α1, α2) dans une zone de surveillance (50), et plusieurs photorécepteurs (31, 32) installés côte-à-côte dans une barrette de photoémetteurs (14) qui reçoivent la lumière d'un cône de réception (β1, β2) venant de la zone de surveillance (50) et qui ont respectivement un élément de résolution locale (41, 42), et chaque photoémetteur (21, 22) constitue avec un photorécepteur (31, 32), une paire photoémetteur/photorécepteur,
dispositif **caractérisé par**

- une unité de commande comportant des moyens pour déterminer le point d'impact du faisceau lumineux (L1, L1', L2, L3) du cône d'émission (α1, α2) de chaque photoémetteur (21, 22) et/ou une source de lumière étrangère (G1) sur l'un des photorécepteurs (31, 32), et
- l'unité de commande comporte des moyens pour appliquer un mode de détermination de distance selon lequel, on détermine pour un premier (31) et un second (32) photorécepteur, le point d'impact du faisceau lumineux (L1, L1') du cône d'émission (α1) du photoémetteur (21) constituant une paire photoémetteur/ photorécepteur avec le premier photorécepteur (31),

* et à partir de la position relative des points d'impact du faisceau lumineux (L1, L1') sur les deux photorécepteurs (31, 32), on détermine l'angle d'incidence (α) sur le second photorécepteur (32), et
* à partir de l'angle d'incidence (α) et de la distance (b) entre les deux photorécepteurs (31, 32), on détermine la distance (a) entre le premier photorécepteur (31) et le photoémetteur (21) associé.

2. Dispositif de capteur optoélectronique selon la revendication 1, **caractérisé en ce que** l'unité de commande assure la commande indépendante de chaque photoémetteur (21, 22) et de chaque photorécepteur (31, 32).

3. Dispositif de capteur optoélectronique selon l'une des revendications précédentes, **caractérisé en ce que** les photorécepteurs (41, 42) de résolution du lieu se composent d'une disposition en matrice de plusieurs éléments photosensibles, de préférence d'un capteur CCD et/ ou d'un capteur d'image CMOS.

4. Dispositif de capteur optoélectronique selon l'une des revendications précédentes, **caractérisé en ce que** l'unité de commande comporte des moyens pour appliquer un mode d'ajustement selon lequel, pour deux paires photoémetteur/photorécepteur, on détermine le point d'impact du faisceau lumineux (L1, L2) du cône d'émission (α1, α2) du photoémetteur (21, 22) sur le photorécepteur (31, 32) correspondant,

* et à partir de la position relative des points d'impact des faisceaux lumineux (L1, L2) sur les deux photorécepteurs (31, 32), on conclut à une position de consigne correspondant à l'ajustage optimum à la manière d'un désajustage.

5. Dispositif de capteur optoélectronique selon l'une des revendications précédentes, **caractérisé en ce que** l'unité de commande comporte des moyens pour mettre en oeuvre un mode de surveillance selon lequel, pour chaque paire photoémetteur/photorécepteur, on détermine le point d'impact optique (L1) du cône d'émission (α1) du photoémetteur (21) sur le photorécepteur (31) correspondant, et on vérifie si un effet de miroir ou de la lumière étrangère, génèrent un autre point d'impact optique (L3) sur le même photorécepteur (31) et s'il y a un second point d'impact optique (L3) sur le photorécepteur (31), à partir de la position relative des points d'impact optiques (L1, L3) sur le photorécepteur (31), par rapport aux positions de consigne prédéfinies, on en conclut qu'il y a une inversion par miroir autorisée ou non autorisée, ou une incidence de lumière étrangère.

6. Procédé de surveillance d'une zone de surveillance (50) avec plusieurs photoémetteurs (21, 22) juxtaposés dans une barrette de photoémetteurs (12) qui émettent respectivement de la lumière dans un cône d'émission ($\alpha$1, $\alpha$2) dans la zone de surveillance (50) et plusieurs photorécepteurs (31, 32) juxtaposés dans une barrette de photorécepteurs (14) recevant la lumière d'un cône de réception ($\beta$1, $\beta$2) à partir de la zone de surveillance (50), et qui comportent chacun un élément de résolution locale (41, 42),

   * chaque photoémetteur (21, 22) formant avec un photorécepteur (31, 32), une paire photoémetteur/ photorécepteur,
   * dans un mode de détermination de distance pour un premier photorécepteur (31) et un second photorécepteur (32), on détermine le point d'impact optique (L1, L1') du cône d'émission ($\alpha$1) du photoémetteur (L1) formant une paire photoémetteur/photorécepteur avec le premier photorécepteur (31),
   * à partir des positions relatives des points d'impact optiques (L1, L1') sur les deux photorécepteurs (31, 32), on détermine l'angle d'incidence ($\alpha$) sur le second photorécepteur (32), et
   * à partir de l'angle d'incidence ($\alpha$) et de la distance (b) entre les deux photorécepteurs, on détermine la distance (a) entre le premier photorécepteur (31) et le photoémetteur (21) correspondant.

7. Procédé selon la revendication 6,
   **caractérisé en ce que**
   dans le mode de détermination de distance, pour déterminer la distance (a), on utilise des paires photoémetteur/photorécepteur différentes, décalées dans le temps.

8. Procédé selon la revendication 6 ou 7,
   **caractérisé en ce que**
   dans un mode d'ajustement pour deux paires photoémetteur/photorécepteur, on détermine le point d'impact optique (L1, L2) du cône d'émission ($\alpha$1, $\alpha$2) du photoémetteur (21, 22) sur le photorécepteur (31, 32) correspondant,

   * à partir de la position relative des points d'impact optiques (L1, L2) sur les deux photorécepteurs (31, 32), on conclut à des positions de consigne correspondant à l'ajustage optimum à la manière d'un désajustage.

9. Procédé selon la revendication 8,
   **caractérisé en ce qu'**

- on définit un axe X (X) par les photoémetteurs (21, 22) juxtaposés,
- on définit un axe Z (Z) par l'axe de symétrie du cône d'émission ($\alpha$1, $\alpha$2) et un axe Y (Y) perpendiculaire à l'axe X (X) et l'axe Z (Z), et
- en cas d'écart entre les points d'impact optiques (L1, L2) des deux cônes d'émission ($\alpha$1, $\alpha$2) des photoémetteurs (21, 22) par rapport à la position de consigne, dans la même direction suivant l'axe Y (Y), on conclut à une rotation de la barrette de photoémetteurs (14) autour de l'axe X (X),
- en cas d'écart des points d'impact optiques (L1, L2) des deux cônes d'émission ($\alpha$1, $\alpha$2) des photoémetteurs (21, 22) par rapport à la position de consigne dans la même direction le long de l'axe X (X), on conclut à une rotation de la barrette de photoémetteurs (14) autour de l'axe Y (Y),
- en cas d'écart des points d'impact optiques (L1, L2) des deux cônes d'émission ($\alpha$1, $\alpha$2) des photoémetteurs (21, 22) par rapport à la position de consigne dans la direction opposée le long de l'axe Y (Y), on conclut à une rotation de la barrette de photoémetteurs (14) autour de l'axe Z (Z), et
- en cas d'écart des points d'impact optiques (L1, L2) des deux cônes d'émission ($\alpha$1, $\alpha$2) des photoémetteurs (21, 22) par rapport à la position de consigne dans la direction opposée le long de l'axe X (X), on en conclut que la barrette de photoémetteurs (14) a été montée en position retournée.

10. Procédé selon la revendication 8 ou 9,
    **caractérisé en ce que**
    dans le mode d'ajustage, pour déterminer le désajustage, on utilise des paires de photoémetteur/photorécepteur, différentes, décalées dans le temps.

11. Procédé selon les revendications 8, 9 ou 10,
    **caractérisé en ce que**
    les positions de consigne se déterminent par un procédé d'apprentissage.

12. Procédé selon l'une des revendications 6 à 11,
    **caractérisé en ce que**
    dans un mode de surveillance pour chaque paire de photoémetteur/photorécepteur, on détermine le point d'impact optique (L1) du cône d'émission ($\alpha$1) du photoémetteur (21) sur le photorécepteur (31) correspondant et on vérifie si une inversion par miroir ou par une source de lumière étrangère, génèrent un autre point d'impact optique (L3) sur le même photorécepteur (31), et

    * si un second point d'impact optique (L3) existe sur le photorécepteur (31), à partir de la position relative des points d'impact optiques (L1, L3) sur le photorécepteur (31), par rapport à des positions de consigne prédéfinies, on en conclut qu'il existe une inversion par miroir autorisée ou non autorisée ou une incidence de lumière étrangère.

13. Procédé selon la revendication 12,
    **caractérisé en ce que**
    dans le mode de surveillance, pour déterminer s'il y a une inversion par miroir autorisée ou non autorisée ou une incidence de lumière étrangère, on utilise des paires de photoémetteur/photorécepteur différentes, décalées dans le temps.

14. Procédé selon les revendications 12 ou 13,
    **caractérisé en ce que**
    les positions de consigne se déterminent par un procédé d'apprentissage.

Fig.1

Fig.2

Fig.3

Fig.4

Fig.5

Fig.6

Fig.7

Fig.8

EP 1 993 081 B1

Fig.9

10

21

12

G1

50

31

14

x

L3

41

y

L1

Fig.10

10

G2

21

12

G1

50

31

14

41

x

L3

C1

y

C2

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19718390 A1
- DE 10359782 A1